# EUROPEAN PATENT APPLICATION

(11) **EP 2 521 371 A1**
(43) Date of publication of application: **07.11.2012**
(21) Application number: 12002070.6
(22) Date of filing: 23.03.2012
(51) Int. Cl.: H04N 21/431, H04N 5/445, H04N 21/482

(54) **Method of displaying program information and electronic system thereof**

(30) Priority: 03.05.2011 CN 201110112472
(71) Applicant: ALi Corporation, Taiwan, R.O.C. (TW)
(72) Inventor: Liao, Kung-Lieh, Taipei City (TW)
(74) Representative: Görz, Ingo

(57) **Abstract**

How to integrate program information and relative functions of various configuration menus of an electronic system (10) into one single time-frame menu (T) is disclosed. The disclosed method includes generating a time-frame menu (T) displaying dates and times of different programs; retrieving activate times, actions, and program information for either one of the first and the second programs respectively set in the first or the second configuration menus (M1, M2); utilizing graphical icons (D1, D2, D3) for displaying program information of the first and the second programs on the time-frame menu (T). The activate time of a program is adjusted by adjusting a location of a corresponding graphical icon (D1, D2, D3), and the interval of the program is adjusted by adjusting a length of the corresponding graphical icon (D1, D2, D3). Therefore, a user is able to browse or adjust his or her previous settings via a unified interface.

## Description

The present invention relates to a method and an electronic system for displaying program information, and more particularly, a method and an electronic system, which includes a digital set-top box (STB), for integrating program information and related functions of different configuration menus.

The concept of a digital family is to digitize household appliances and to integrate all the digitized household appliances with the aid of networks. In a digital family, advanced network transmission technologies are utilized for sufficient bandwidth as a base for integrating technologies related to information, communications, and consumer electronic products. Televisions act as primary household appliances in a conventional family, therefore digitizing a television (TV) helps in forming a digital family.

A digital TV uses digital television broadcasting to transform conventional analog video signals into digital video signals. In comparison to a conventional analog television broadcasting system utilizing the national television standard committee (NTSC) system, digital video signals help in neutralizing signal attenuation or in preventing unstable signals caused by factors including distance or a utilized medium in TV signal transmission/processing. For users, image quality of digital televisions is better than that of analog televisions, and there is no flicker nor blurring of the images displayed by a digital television as well. For digital television program providers, after digitizing television signals, transmitted data can be efficiently compressed so as to increase the amount of transmitted data. In other words, the digital television includes more information, and supports additional functions including data return. Therefore, in comparison to a conventional analog television, a digital television is capable of providing high image quality, various channel options, and the function of interactive channels.

The core product in television digitization is a digital set-top box (STB). A digital STB is a decoder having complete capability to decode digital television signals. There are four types of digital televisions that differ in transmission means: satellite STB, terrestrial STB, cable STB, and IP STB. To unify transmission of digital signals, primary means of transmitting digital signals includes advanced television committee (ATSC), digital video broadcasting (DVB) and integrated service digital broadcasting (ISDB). There are still other means of transmitting digital signals in various territories, such as mainland China. No matter which means are utilized for transmitting digital signals, a digital television receiver is required for receiving digital television signals, where the digital television receiver may be utilized in a conventional STB.

A digital television provides various programs and corresponding program information and control functions. For example, a digital television is capable of providing functions including an electronic program guide (EPG), an electronic program recording list, a program timer, a record timer, playing and recording of IPTV, network radio, my favorites, record manager, or preview management. However, the information and functions are distributed in different interfaces or lists. That is, when a user intends to utilize the above-listed functions, he or she has to access a specific list for the function he or she needs. As a result, the user cannot browse his previous settings in an efficient manner. If the user intends to update or adjust his previous settings for different functions, he or she has to update or adjust the settings by accessing different lists, which is a time-consuming action. As popularity of digital televisions rises, channels and functions of digital televisions also grow significantly, so that the above problem will introduce even greater inconvenience to the user.

This in mind, the present invention aims at providing a method and an electronic system for display program information.

This is achieved by a method and an electronic system according to claims 1 and 11 respectively. The claims pertain to corresponding further development and improvements.

As will be seen more clearly from the detailed description below, the method includes generating a time-frame menu having a time axis and an information axis, where the time axis is configured to displaying by using different time units; retrieving an activate time, an action, and program information of a first program in a first configuration menu; and displaying program information of the first program on a graphical icon of the time-frame menu according to the activate time and the action for the first program. An interval and an activate time of the action for the first program are updated by updating a length and a location of the graphical icon on the time axis.

Additionally, the electronic system includes a function module, a storage module, and an integration module. The function module is utilized for generating a first configuration menu. The storage module is electronically connected to the function module for storing an activate time, an action, and program information of a first program set in the first configuration menu. The integration module is electrically connected to the storage module for generating a time-frame menu and for displaying the program information of the first program on a graphical icon of the time-frame menu according to the activate time and the action for the first program. An interval and an activate time of the action for the first program are updated by updating a length and a location of the graphical icon on the time axis.

In the following, the invention is further illustrated by way of example, taking reference to the accompanying drawings. Thereof
FIG. 1 illustrates an electronic system according to one embodiment of the present invention,
FIG. 2 illustrates a time-frame menu according to one embodiment of the present invention,
FIG. 3 illustrates how to adjust an activate time and an action for a program by utilizing the time-frame menu shown in FIG. 2 according to one embodiment of the present invention,
FIG. 4 illustrates how to preview a program using a corresponding graphical icon on the time-frame menu according to one embodiment of the present invention,
FIG. 5 illustrates how to adjust a time unit utilized by a time axis on the time-frame menu according to one embodiment of the present invention,
FIGs. 6-7 illustrate how to list elements, such as program titles or program channels, on the Y-axis of the time-frame menu shown in FIG. 2 according to settings in a first configuration menu and a second configuration menu, according to one embodiment of the present invention,
FIG. 8 illustrates how to schedule actions of recording a program by using graphical icons on the time-frame menu according to one embodiment of the present invention,
FIG. 9 illustrates how to display replay intervals of a program by using the time-frame menu according to one embodiment of the present invention,
FIG. 10 illustrates the setting of the activate time or the interval of a scheduled-recording program by integrating the time-frame menu and a list according to one embodiment of the present invention, and
FIG. 11 illustrates the time-frame menu having merely one source channel according to one embodiment of the present invention.

The present invention discloses a method and an electronic system thereof, for unifying user-defined settings of different interfaces or lists in a same time-frame menu. By quantifying contexts, e.g. by transforming the contexts into graphical icons, the user does not have to access different configuration menus. Instead, he or she is able to browse or adjust his/her previous settings via a unified interface.

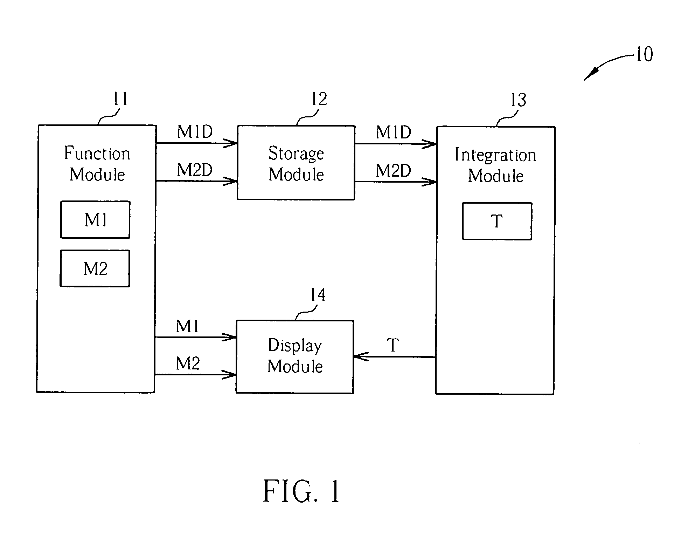

Please refer to FIG. 1, which illustrates an electronic system, e.g. a digital television 10, according to one embodiment of the present invention. The digital television 10 includes a function module 11, a storage module 12, an integration module 13 and a display module 14. The function module 11 is utilized for generating a first configuration menu M1 and a second configuration menu M2, which represent function lists of different sources. The different sources may at least include the cable television, the digital television, the satellite television, the IPTV, and the IP radio. For example, the source of the first configuration menu M1 may be the IPTV, the source of the second configuration menu M2 may be the IP radio, and the user is allowed to respectively set functions of the first configuration menu M1 and the second configuration menu M2, where the functions may include scheduled recording, scheduled playing, or program reminding.

The storage module 12 is electrically connected to the function module 11 for storing the settings made by the user in either one of the first configuration menu M1 or the second configuration menu M2. For example, the user may set a first program P1 in a first configuration menu M1 to generate a first setting datum M1D, and may set a second program P2 in a second configuration menu M2 to generate a second setting datum M2D. The first setting datum M1D includes the activation time, the action, and the program information of the first program P1. The second setting datum M2D includes the activation time, the action, and the program information of the second program P2.

The integration module 13 is electrically connected to the storage module 12 for generating a time-frame menu T, and is configured to display the setting, which is made on the first program P1 by the user, in graphical icons on the time-frame menu T, or to display the setting, which is made on the second program P2 by the user, in graphical icons on the time-frame menu T. By adjusting a length or a location of the graphical icons on the time-frame menu T, a running interval of the program set in the time-frame menu T can be correspondingly updated.

The display module 14 is electrically connected to the function module 11 and the integration module 13, for respectively displaying the first configuration menu M1, the second configuration menu M2, and the time-frame menu T.

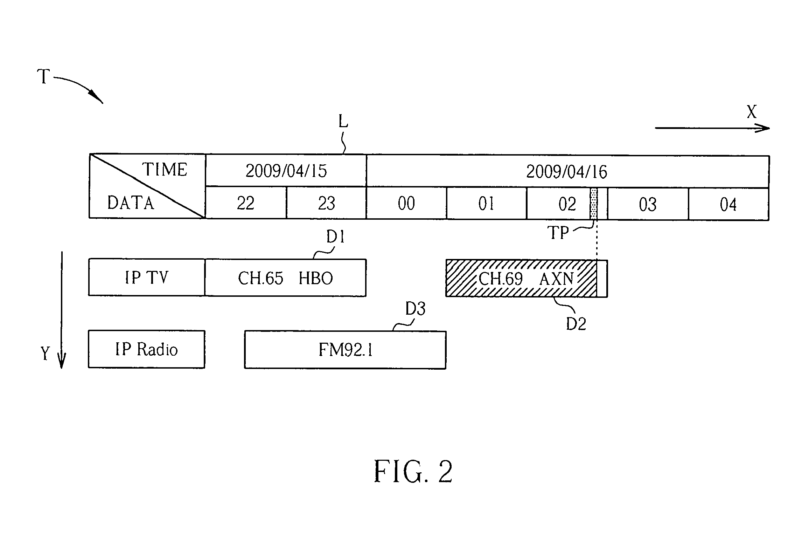

Please refer to FIG. 2, which illustrates the time-frame menu T according to one embodiment of the present invention. The time-frame menu T generated by the integration module 13 may represent the activation time, the action, or the program information of either one of the first program P1 or the second program P2 in different ways. In this embodiment, the first axis, for example, the X-axis of the time-frame menu T, is a time axis L for indicating different time units; the integration module 13 arranges a second axis of the time-frame menu T, for example, the Y-axis, according to a first setting datum M1D and a second setting datum M2D by using other parameters which may include a program title, a program source, or a channel. The time unit indicated by the time axis L may include year, month, date, hour, minute, or second and may be changed according to the user's requirements. Therefore, program information of the first program P1 or the second program P2 can be displayed on the time-frame menu T according to the activate time and the graphical icons corresponding to an assigned action of the first program P1 or the second program P2.

The first program P1 or the second program P2 may be a delay-live program, a network radio program, an analog TV program, a digital TV program, or a network TV program. The program source may include a cable TV schedule, a digital TV schedule, and a satellite TV schedule, but is not limited to the listed schedules.

As shown in FIG. 2, if the user schedules a configuration menu of the IP TV, which corresponds to the first configuration menu M1 shown in FIG. 1, to record the program "Sex and the City" played on HBO having a channel serial number 65 at the IP TV from 22:00 of 2009/04/15 (defined as year/month/date in the following), to 0:00 of 2009/04/16, and to record the program "Crime Scene Investigation" played on AXN having a channel serial number 69 at the IP TV from 01:00 to 03:00 of 2009/04/16, and if the user also schedules a radio program under a channel frequency FM 92.1 to play between 22:30 of 2009/04/1 and 01:00 of 2009/04/16 by setting the IP radio configuration menu, which corresponds to the second configuration menu M2 shown in FIG. 1, the integration module 13 will integrate the above settings scheduled by the user and display the integrated settings in the time-frame menu T. In this embodiment, the integration module 13 lists sources of both the first configuration menu M1 and the second configuration menu M2 on the Y-axis of the time-frame menu T, i.e. the categories 'IP TV' and 'IP Radio' shown in time-frame menu T. The integration module 13 transforms the above-mentioned settings into graphical icons in correspondence with the time-axis L and the sources of scheduled programs.

More specifically, the graphical icon D 1 shown in FIG. 2 is generated according to the setting which is scheduled to record the program 'Sex and the City' on HBO between 22:00 of 2009/04/15 and 0:00 of 2009/04/16, where a source of the graphical icon D 1 is indicated by the category 'IP TV' displayed on the Y-axis of the time-frame menu T, and a length of the graphical icon D1 is indicated by a length on the time axis L from 22:00 of 2009/04/15 to 0:00 of 2009/04/16, with the aid of the integration module 13. The graphical icon D2 shown in FIG. 2 is generated according to the setting which is scheduled to record the program 'Crime Scene Investigation' on AXN between 01:00 and 03:00 of 2009/04/16, where a source of the graphical icon D2 is indicated by the category 'IP TV' displayed on the Y-axis of the time-frame menu T, and a length of the graphical icon D2 is indicated by a length on the time axis L from 01:00 to 03:00 of 2009/04/16, with the aid of the integration module 13. The graphical icon D3 shown in FIG. 2 is generated according to the setting which is scheduled to play the radio program on the radio chancel FM 92.1 between 22:30 of 2009/04/15 and 01:00 of 2009/04/16, where a source of the graphical icon D3 is indicated by the category 'IP Radio' displayed on the Y-axis of the time-frame menu T, and a length of the graphical icon D3 is indicated by a length on the time axis L from 22:30 of 2009/04/15 to 01:00 of 2009/04/16, with the aid of the integration module 13. Other tags may be optionally added to the graphical icons D1, D2, and D3 in other embodiments of the present invention, where the other tags may include details such as program information or actions. In this embodiment, as shown in FIG. 2, the categories 'CH.65 HBO', 'CH69. AXN', and 'FM 92.1' are tagged for indicating program channels respectively indicated by the graphical icons D1, D2, and D3.

When the action set in either one of the first configuration menu M1 or the second configuration menu M2 is performed, such as recording or playing, there may also be a corresponding action tag saying "recording..." or "playing..." in the graphical icons D1, D2, and D3. For example, when the user sets an action of recording a program on the channel serial number 69 standing for AXN of the IP TV during 01:00-03:00 of 2009/04/16, there may be a tag saying "CH.69 AXN recording ..." shown on the corresponding graphical icon D2 according to one embodiment of the present invention.

Furthermore, in another embodiment related to the time-frame menu T, there may also be a time pointer TP in the time axis L for indicating a current moment. When certain actions are being performed at a current moment indicated by the time pointer TP, the time pointer TP is configured to point at the graphical icon corresponding to the performed action on the time-frame menu T for indicating a speed of the performed action. For example, the time pointer TP may point at a location indicating 02:50 of 2009/04/16 on the time axis L when it comes to 02:50 of 2009/04/16; as shown in FIG. 2, it matches the time when the program on the channel serial number 69 standing for AXN is recorded, as indicated by the graphical icon D2; and, the interval between the activate time of the graphical icon D2 and the current moment pointed to by the time pointer TP may also be specifically indicated, such as by using shaded background, for indicating a current progress of the graphical icon D2 in recording the program.

In the embodiment shown in FIG. 2, the X-axis of the time-frame menu T indicates the time axis L, and the Y-axis of the time-frame menu T indicates a source of a configuration menu, such as the first configuration menu M1 or the second configuration menu M2; however, in other embodiments of the present invention, the definitions of both the X-axis and Y-axis on the time-frame menu T may also be exchanged with each other. For example, in one embodiment of the present invention, the X-axis on the time-frame menu T is defined to be the source of a configuration menu, and the Y-axis is defined to be the time axis L. The graphical icons in the time-frame menu T, such as the graphical icons D 1 and D2, may also be adjusted in correspondence with the definitions of both the X-axis and the Y-axis in the time-frame menu T.

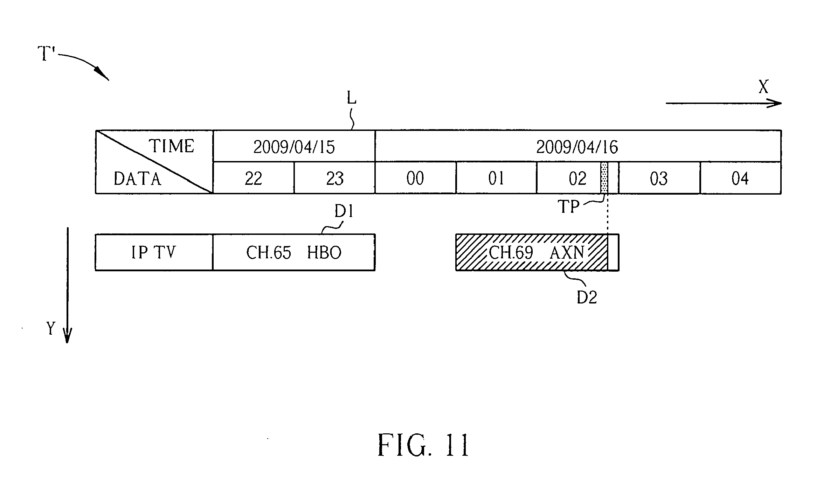

Note that the types and the number of the sources utilized in the time-frame menu T are not limited to the IP TV and the network radio in other embodiments of the present invention. For example, the number of utilized sources may be one or more than two in some embodiments of the present invention. Please refer to FIG. 11, which illustrates a time-frame menu T' having only one source according to one embodiment of the present invention. Operations of the time-frame menu T' are similar with those of the time-frame menu T shown in FIG. 2, except that the Y-axis of the time-frame menu T' merely includes one source, i.e. the IP TV. Moreover, program information, such as a program title, a source, or a channel, may also be indicated on the Y-axis of the time-frame menu T', as shown in FIGs. 2, 6, and 7.

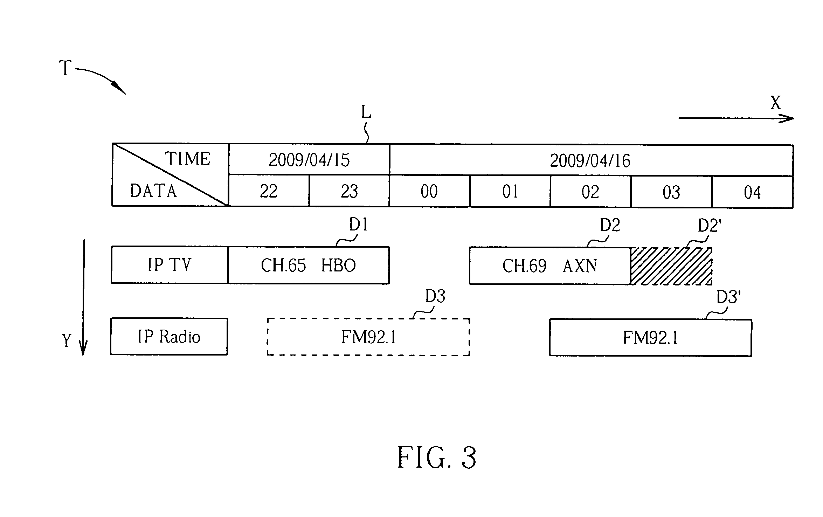

In the time-frame menu T, the user is allowed to adjust a length or a location of a graphical icon on the time axis L for adjusting an interval of an action set in a corresponding configuration menu, as illustrated in FIG. 3 according to an embodiment of the present invention. Operations of the time-frame menu T shown in FIG. 3 are similar with those of the time-frame menu T shown in FIG. 2. As mentioned above, the location of a graphical icon on the time-frame menu T can be adjusted so as to adjust an activation time of an action defined for the graphical icon. For example, by shifting the graphical icon D3 to another location, as indicated by the graphical icon D3' shown in FIG. 3, the FM 92.1 program originally scheduled to be played between 22:30 of 2009/04/15 and 01:00 of 2009/04/16 is re-scheduled to be played during 02:00-04:30 of 2009/04/16. The interval of the action defined by a corresponding graphical icon on the time-frame menu T may also be adjusted. For example, as shown in FIG. 3, by lengthening a length of the graphical icon D2, as indicated by a graphical icon D2', the action of recording the program on the channel serial number 69 standing for AXN during 01:00-03:00 of 2009/04/16 is re-scheduled to be recorded during 01:00-04:00 of 2009/04/16.

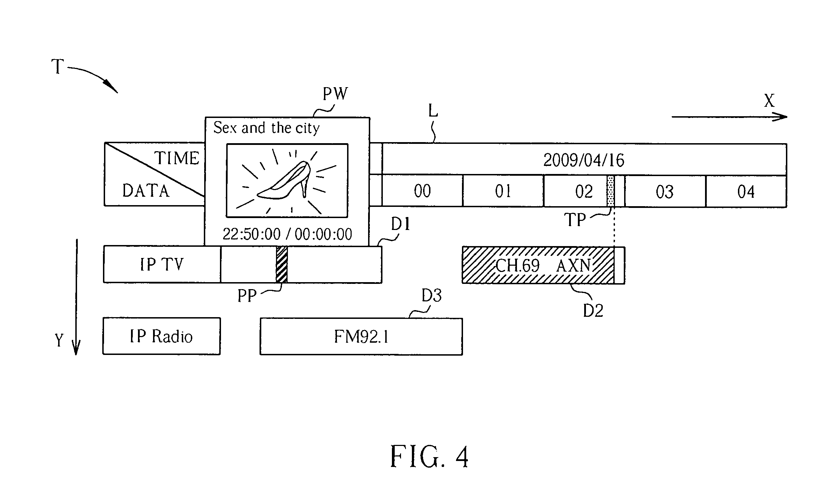

The user is allowed to choose a graphical icon, for example, by clicking on the graphical icon, on the time-frame menu T for previewing or playing a program corresponding to the chosen graphical icon. Please refer to FIG. 4, which illustrates how to preview a program by utilizing a corresponding graphical icon on the time-frame menu T according to one embodiment of the present invention. In FIG. 4, the time pointer TP points at the moment 02:50 of 2009/04/16, and it indicates the fact that the action of recording the program of the channel serial number 65 standing for HBO during 22:00 of 2009/04/15 to 0:00 of 2009/04/16 has been completed, as indicated by the graphical icon D1, so that the recorded program may be accessed by directly utilizing the time-frame menu T. As shown in FIG. 4, the graphical icon D1 has a progress pointer PP for indicating a current progress of the action defined for the graphical icon D1. When the user clicks or chooses the graphical icon D1, the progress pointer PP points at a start location of the graphical icon D 1 as a default, i.e. the progress pointer PP points at the 0^{th} minute of the recorded HBO program, and the time-frame menu T displays a preview image of the recorded HBO program on a preview window PW at the location pointed at by the progress pointer PP.

One from a plurality of preview images indicating different moments of the recorded program can be displayed on the preview window PW according to a moving location of the progress pointer PP on the graphical icon D1. Moreover, the program title, the activation time, or the program information of the recorded program may also be displayed on the preview window PW. As shown in FIG. 4, when the procedure pointer PP is moved to point at the moment 22:50 of 2009/04/15 on the time axis L, a preview image indicating the 50^{th} minute of the recorded program on the IP TV is displayed on the preview window PW.

In other words, when the progress pointer PP or a cursor is moved to point at the graphical icon D1, the program title, the activation time, the program information, a screenshot, or at least one of the above-listed items of the recorded program corresponding to the graphical icon D 1 is displayed on the preview window PW. The preview window PW may be an independent window from the time-frame menu T so that the user is able to preview the recorded program corresponding to the graphical icon D1 instantly.

In another embodiment of the present invention, the recorded program corresponding to the graphical icon D1 may also be displayed in the preview window PW or in a full-screen manner when the user clicks on or chooses the graphical icon D1. While playing the recorded program, the activation time of playing the recorded program may be chosen by adjusting the location pointed to by the progress pointer PP.

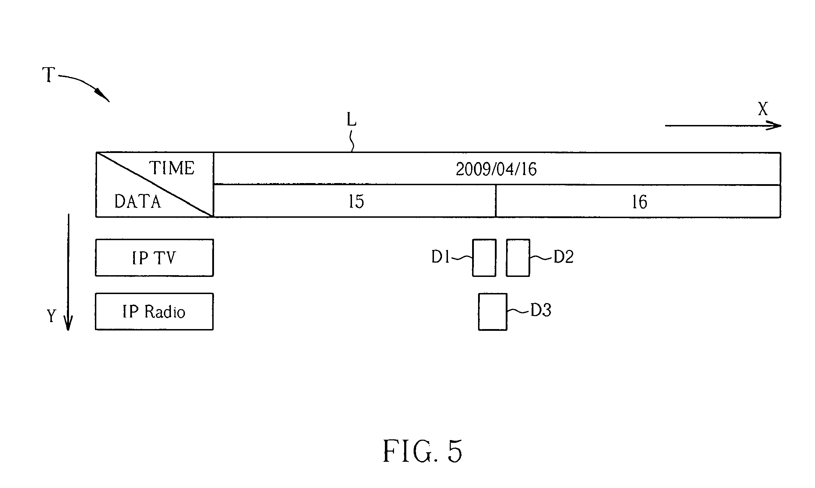

Please refer to FIG. 5, which illustrates how to adjust a time unit of the time axis L on the time-frame menu T according to one embodiment of the present invention. Operations of the time-frame menu T shown in FIG. 5 are similar to those shown in FIGs. 2-4, however, the time unit used in FIGs. 2-4 for the time axis L is hours, whereas the time unit used in FIG. 5 for the time axis L is date. Lengths of the graphical icons D1, D2, and D3 in FIG. 5 are also updated by date, instead of by hours. In some embodiments of the present invention, the time unit used by the time axis L is inputted arbitrarily or in a predetermined manner. For example, by pressing a hotkey, the time unit may be changed from hours, as shown in FIG. 4, to date, as shown in FIG. 5, so that the time range of the time axis L may be changed between different scales in some embodiments of the present invention. In another embodiment of the present invention, the time unit utilized by the time axis L is changed according to a predetermined rule. For example, when a time range corresponding to scheduled actions of the time-frame menu T is broader than a current time range utilized by the time-frame menu T, the time-frame menu T is configured to automatically broaden its time range by changing the utilized time unit on the time axis L so that the user is prevented from manually switching or scrolling the page which currently shows the time-frame menu T for accessing the graphical icon he or she would like to update the setting of.

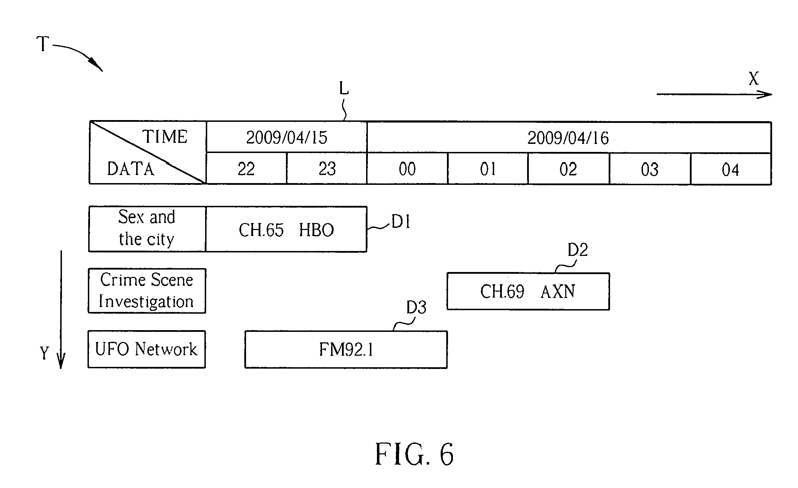

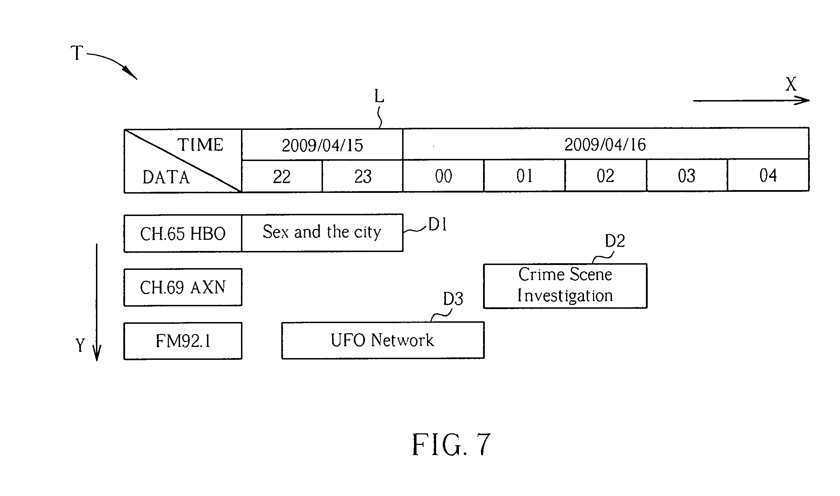

Please refer to FIGs. 6-7, which illustrate how to change elements shown on the Y-axis of the time-frame menu T according to one embodiment of the present invention, where programs set in either one of the first configuration menu M1 and the second configuration menu M2 are listed as the elements of the Y-axis in FIG. 6, and the names of channels are listed as the elements of the Y-axis in FIG. 7. As can be observed in FIG. 6, program titles 'Sex and the City', 'Crime Scene Investigation', and 'UFO Network' respectively provided by the channels HBO, AXN, and FM 92.1 on the graphical icons D1, D2, and D3 are listed as elements of the Y-axis of the time-frame menu T according to settings in either one of the first configuration menu M1 and the second configuration menu M2. As can be observed in FIG. 7, the names of channels, i.e. 'HBO', 'AXN', and 'FM 92.1' are also respectively listed as elements of the Y-axis of the time-frame menu T according to settings in either one of the first configuration menu M1 and the second configuration menu M2. The operations of the time-frame menu T shown in FIGs. 6-7 are similar with those in FIGs. 2-4, and the difference merely lies in the elements shown on the Y-axis of the time-frame menu T.

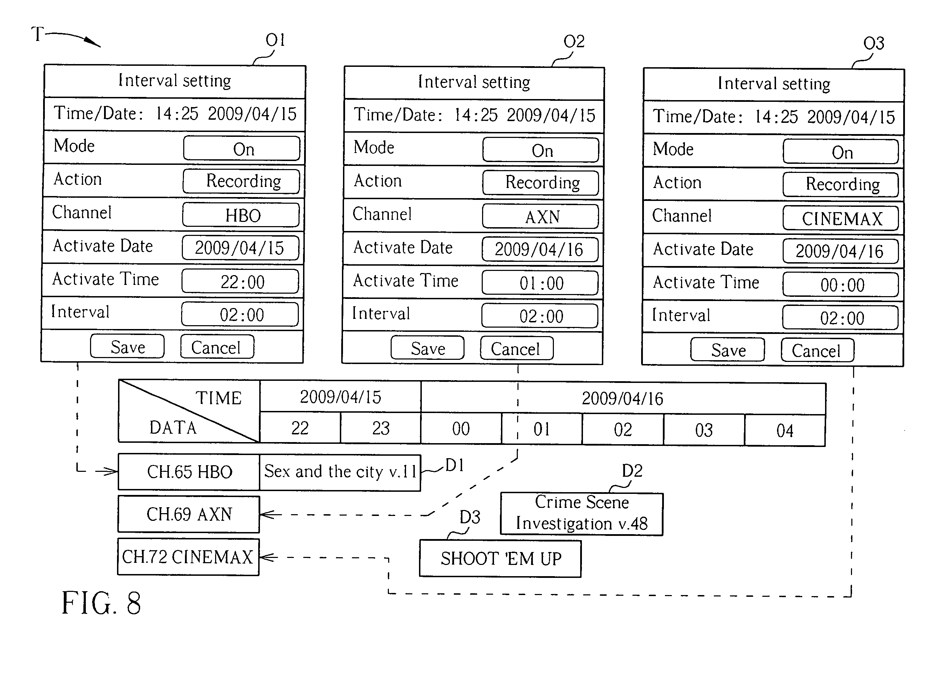

Please refer to FIG. 8, which illustrates how actions of recording programs are transformed into graphical icons by using the time-frame menu T according to one embodiment of the present invention. The user is allowed to schedule actions of recording programs provided by the IP TV, such as setting channels, dates, activation times, and intervals of recording the programs. For example, as shown in FIG. 8, a list 01 is set to record the program 'Sex and the City' provided by the channel serial number 65 standing for HBO between 22:00 of 2009/04/15 and 00:00 of 2009/04/16, a list 02 is set to record the program 'Crime Scene Investigation v.48' provided by the channel serial number 69 standing for AXN during 01:00-03:00 of 2009/04/16, and a list 03 is set to record the program 'SHOOT 'EM UP' provided by the channel serial number 72 standing for CINEMAX during 00:00-02:00 of 2009/04/16.

The integration module 13 is configured to show channels set on the first configuration menu M1 as elements of the Y-axis on the time-frame menu T, i.e. the names of channels 'CH.65 HBO', 'CH.69 AXN', and 'CH.72 CINEMAX' shown on the Y-axis of the time-frame menu T in FIG. 8. Similar to FIG. 2, the integration module 13 is configured to transform the intervals of recording programs into graphical icons D1, D2, and D3 and to integrate the graphical icons D1, D2, and D3 with the time axis L and the source channels on the time-frame menu T. How to move the graphical icons D1, D2, and D3 and how to adjust the lengths of the graphical icons D1, D2, and D3 in FIG. 8 are similar to FIG. 3. How to preview the recorded programs via the graphical icons D1, D2, and D3 in FIG. 8 are similar to FIG. 4. Therefore, the user is able to browse and adjust settings on the time-frame menu T or to preview the recorded program.

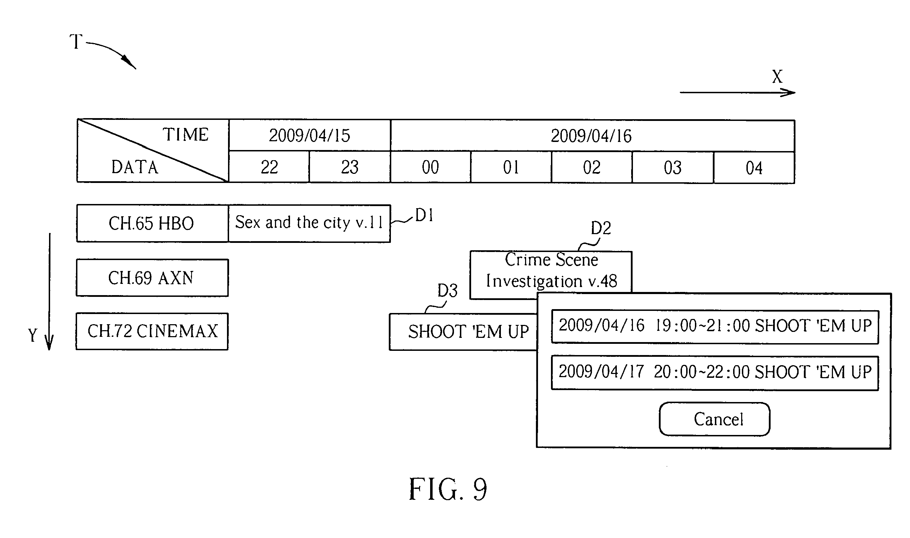

In one embodiment of the present invention, an electronic program guide may also be used by the user for choosing a program to schedule related actions, such as scheduled recording. Therefore, the time-frame menu T is capable of transforming a scheduled interval for recording the chosen program into a graphical icon according to information provided by the electronic program guide. When the interval of the chosen program is overlapped with intervals of other scheduled programs, or when the interval of the chosen program has been passed, the time-frame menu T may still list at least one rerun interval of the chosen program if the rerun interval exists and is recorded in the electronic program guide, so that the user is able to choose one of the at least one optional rerun interval for recording the chosen program. Please refer to FIG. 9, which illustrates how to show rerun intervals of a chosen program on the time-frame menu according to one embodiment of the present invention. As shown in FIG. 9, when the interval of recording the program 'SHOOT 'EM UP', i.e. 00:00-02:00 of 2009/04/16 overlaps the interval of recording the program 'Crime Scene Investigation v.48', i.e. 01:00-03:00 of 2009/04/16, the time-frame menu T further displays rerun intervals of the program 'SHOOT 'EM UP' according to the electronic program guide, so that the user is able to browse or choose one of the rerun intervals for recording the program 'SHOOT 'EM UP'.

In another embodiment of the present invention, when the user chooses one volume of a series, such as a television drama series, by following the electronic program guide, the time-frame menu T may also display other volumes of the current series from the electronic program guide so that the user is able to browse or schedule one from the displayed volumes for recording.

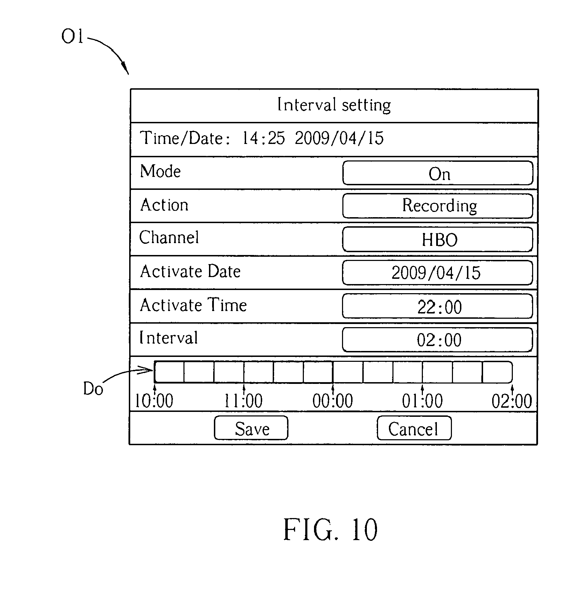

Please refer to FIG. 10, which illustrates an integration of the time-frame menu T and the list 01 for indicating interval settings in graphical icons. As shown in FIG. 10, the list O1 is similar to that in FIG, 8, where the difference lies in the fact that a graphical icon D0 is generated for indicating the activation time and the interval of recording for the chosen program. The user is also allowed to move the graphical icon D0 or to adjust the length of the graphical icon D0 for correspondingly updating the activation time or the duration of recording the chosen program.

Note that sources (such the IP TV or the IP radio), channel serial numbers, names of channels, dates, times, or how the graphical icons are shown for each configuration menu are not limited to the above-mentioned figures of the present invention. Besides, the present invention is also not limited to digital televisions applying digital television broadcast systems; the present invention may also be utilized on electronic systems having functions of displaying/playing programs or multimedia files. Embodiments formed by integrating program information and related functions of different configuration menus in a single time-frame menu should still be regarded as embodiments of the present invention.

In summary, a time-frame menu is disclosed in the present invention. The X-axis of the time-frame menu indicates a time axis, and the Y-axis of the time-frame menu indicates elements set in different configuration menus, such as program titles, program sources, or channels. The present invention is configured to integrate settings of different configuration menus of digital televisions made by a user and to display the integrated settings by graphical icons. Each graphical icon corresponds to the time axis so that the activation time of a corresponding action may be updated by moving a graphical icon, and the duration of the corresponding action may be updated by adjusting the length of the graphical icon. Therefore, the user is able to browse his previous settings via a unified interface and to directly change the settings by updating corresponding graphical icons without respectively making settings in respective setting lists, which introduces great convenience.

## Claims

1. A method of displaying program information, the method comprising:
generating a time-frame menu having a time axis and an information axis, wherein the time axis is configured to display using different time units;
retrieving an activation time, an action, and program information of a first program in a first configuration menu; and
displaying program information of the first program on a graphical icon of the time-frame menu according to the activation time and the action for the first program;
**characterized in that** an interval and an activation time of the action for the first program are updated by updating a length and a location of the graphical icon on the time axis.

2. The method of claim 1 further comprising:
retrieving an activation time, an action, and program information of a second program set in a second configuration menu; and
displaying program information of the second program by displaying a graphical icon corresponding to the second program on the time-frame menu according to the activation time and the action for the second program.

3. The method of claim 2 further comprising:
displaying a program title of the first program on a graphical icon corresponding to the first program on the time-frame menu; and
displaying a program title of the second program on a graphical icon corresponding to the second program on the time-frame menu.

4. The method of claim 2, wherein either one of the first program and the second program is a schedule-recorded program, an IP radio program, an analog television program, a digital television program, or a IP TV program.

5. The method of claim 2, further comprising:
displaying at least one rerun interval of the first program according to an electronic program guide by the time-frame menu when the activation time and
the interval of the action for the first program overlaps the activation time and an interval of the second program.

6. The method of claim 1, wherein the interval of the action for the first program on the time axis is adjusted by adjusting the length of the graphical icon, and the activation time of the action for the first program on the time axis is adjusted by adjusting the location of the graphical icon on the time axis.

7. The method of claim 1, further comprising:
displaying at least one of a program title, the activation time, the program information, and a screenshot of the first program on a preview window which is independent from the time-frame menu.

8. The method of claim 1, further comprising:
previewing or playing the first program by choosing the graphical icon corresponding to the first program on the time-frame menu.

9. The method of claim 8, wherein previewing or playing the first program by choosing the graphical icon corresponding to the first program on the time-frame menu comprises:
adjusting a moment of the first program on the graphical icon for displaying contents of the first program at the moment on a preview window; and
playing the first program from the moment.

10. The method of claim 1, further comprising:
choosing the action, the activation time, and the interval of the first program according to program information provided by an electronic program guide.

11. An electronic system (10) for displaying program information, the electronic system (10) comprising:
a function module (11) for generating a first configuration menu;
a storage module (12) electronically connected to the function module (11) for storing an activation time, an action, and program information of a first program set in the first configuration menu; and
an integration module (13) electrically connected to the storage module (12) for generating a time-frame menu and for displaying the program information of the first program on a graphical icon of the time-frame menu according to the activation time and the action for the first program;
wherein an interval and an activation time of the action for the first program are updated by updating a length and a location of the graphical icon on the time axis.

12. The electronic system (10) of claim 11 further comprising:
a displaying module (14) electrically connected to the function module (11) and the integration module (13) for displaying the first configuration menu, a second configuration menu, and the time-frame menu.
